# EUROPEAN PATENT APPLICATION

(11) **EP 4 332 716 A2**
(43) Date of publication of application: **06.03.2024**
(21) Application number: 23192821.9
(22) Date of filing: 22.08.2023
(51) Int. Cl.: G05D 1/02

(54) **MAPPING OBJECTS ENCOUNTERED BY A ROBOTIC GARDEN TOOL**

(30) Priority: 31.08.2022 US 202263374207 P
(71) Applicant: Techtronic Cordless GP, Anderson, SC 29621 (US)
(72) Inventor: LEE, Hei Man, Kwai Chung (CN); LAI, Hok Sum Sam, Kwai Chung (CN); CHOI, Man Ho, Kwai Chung (CN); NG, Ho Lam, Kwai Chung (CN); LI, Shing Hin, Kwai Chung (CN); LEE, Chi Chau, Kwai Chung (CN); LAI, Tat Hei, Kwai Chung (CN)
(74) Representative: Zimmermann & Partner Patentanwälte mbB

(57) **Abstract**

A robotic garden tool includes at least one sensor configured to generate signals associated with an object within an operating area. A first electronic processor of the robotic garden tool receives, from the at least one sensor, an obstacle signal associated with an obstacle located within the operating area. The first electronic processor determines a first location of the robotic garden tool at a time corresponding to when the first electronic processor received the obstacle signal. The first electronic processor determines a second location of the obstacle based on the obstacle signal and the first location of the garden tool. The first electronic processor generates mapping information of the operating area that includes a virtual boundary based on the second location of the obstacle. The first electronic processor controls the robotic garden tool in the operating area to remain outside of the virtual boundary based on the mapping information.

## Description

### RELATED APPLICATIONS

This application claims priority to U.S. Provisional Application No. 63/374,207, filed August 31, 2022 (Attorney Docket No. 206737-9066-US01), the entire contents of which are hereby incorporated by reference.

### FIELD

The present disclosure relates to robotic garden tools, particularly to methods and systems for identification of obstacles within an operating area of a robotic garden tool to create a map/mapping information that includes a locations of the obstacles.

### SUMMARY

One embodiment includes a robotic garden tool that may include a housing, a set of wheels coupled to the housing and configured to rotate to propel the robotic garden tool on an operating surface in an operating area, at least one wheel motor coupled to one or more wheels of the set of wheels, the at least one wheel motor configured to drive rotation of the one or more wheels, at least one sensor configured to generate signals associated with an object within the operating area, and a first electronic processor. The first electronic processor may be configured to control the at least one wheel motor to move the robotic garden tool within a first virtual boundary that defines the operating area. The first electronic processor also may be configured to receive, from the at least one sensor, an obstacle signal associated with an obstacle located within the operating area. The first electronic processor also may be configured to determine a first location of the robotic garden tool at a time corresponding to when the first electronic processor received the obstacle signal. The first electronic processor also may be configured to determine a second location of the obstacle based on the obstacle signal and the first location of the garden tool. The first electronic processor also may be configured to generate mapping information of the operating area that includes a second virtual boundary based on the second location of the obstacle. The first electronic processor also may be configured to control the at least one wheel motor to move the robotic garden tool in the operating area to remain outside of the second virtual boundary based on the mapping information.

In addition to any combination of features described above, the first electronic processor may be configured to control the at least one wheel motor to move the robotic garden tool toward the second location of the obstacle based on receiving an approximate location of the obstacle from an external device. The approximate location of the obstacle may be received by the external device via a first user input.

In addition to any combination of features described above, the first electronic processor may be configured to generate the mapping information that includes the second virtual boundary by controlling the at least one wheel motor to move the robotic garden tool around a perimeter of the obstacle in response to detecting the obstacle based on the obstacle signal. In addition to any combination of features described above, the first electronic processor may be configured to generate the mapping information that includes the second virtual boundary by recording a plurality of distance measurements and a plurality of angle measurements between the robotic garden tool and the obstacle as the robotic garden tool moves around the perimeter of the obstacle. In addition to any combination of features described above, the first electronic processor may be configured to generate the mapping information that includes the second virtual boundary by recording a plurality of first locations of the robotic garden tool as the robotic garden tool moves around the perimeter of the obstacle. In addition to any combination of features described above, the first electronic processor may be configured to generate the mapping information that includes the second virtual boundary by determining the second virtual boundary based on respective distance measurements of the plurality of distance measurements, respective angle measurements of the plurality of angle measurements, and respective first locations of the plurality of first locations.

In addition to any combination of features described above, the at least one sensor may include at least one selected from the group consisting of a millimeter wave radar sensor, an optical camera, an infrared sensor, or combinations thereof.

In addition to any combination of features described above, the robotic garden tool may include a network interface configured to communicate with an external device. In addition to any combination of features described above, the first electronic processor may be configured to transmit, via the network interface, the mapping information to the external device for displaying of a map of the operating area by the external device. The map may include the second location of the obstacle, the second virtual boundary of the obstacle, or both the second location and the second virtual boundary.

In addition to any combination of features described above, the first electronic processor may be configured to identify a type of obstacle of the obstacle based on the obstacle signal.

In addition to any combination of features described above, the first electronic processor may be configured to transmit, via a network interface of the robotic garden tool, the type of obstacle of the obstacle to an external device; and receive, via the network interface and from the external device, an indication of whether the type of obstacle of the obstacle was correctly identified by the first electronic processor. The indication may be received by the external device via a first user input.

In addition to any combination of features described above, the first electronic processor may be configured to identify the type of obstacle of the obstacle using a machine learning algorithm of an artificial intelligence system to analyze the obstacle signal. The artificial intelligence system may include one or more neural networks.

In addition to any combination of features described above, the first electronic processor may be configured to receive, via a network interface of the robotic garden tool, a type of obstacle of the obstacle from an external device. The type of obstacle of the obstacle may be received by the external device via a first user input.

In addition to any combination of features described above, the obstacle may be a first obstacle that is a first type of obstacle. In addition to any combination of features described above, the mapping information may include a third virtual boundary based on a third location of a second obstacle that is a second type of obstacle different from the first type of obstacle. In addition to any combination of features described above, the first electronic processor may be configured to control the at least one wheel motor to move the robotic garden tool in the operating area to operate in a first manner nearby the second virtual boundary and operate in a second manner nearby the third virtual boundary. The first manner may be different than the second manner. In addition to any combination of features described above, the first manner of operation may be based on the first type of obstacle of the first obstacle, and wherein the second manner of operation may be based on the second type of obstacle of the second obstacle.

In addition to any combination of features described above, the first manner of operation may include the first electronic processor controlling an edge cutting motor of an edge cutter to be enabled as the robotic garden tool moves around the second virtual boundary. In addition to any combination of features described above, the second manner of operation may include the first electronic processor controlling the edge cutting motor to be disabled as the robotic garden tool moves around the third virtual boundary.

In addition to any combination of features described above, the first electronic processor may be configured to determine at least a portion of the first virtual boundary by receiving, from the at least one sensor, a second obstacle signal associated with a barrier that at least partially defines the operating area. In addition to any combination of features described above, the first electronic processor may be configured to determine at least a portion of the first virtual boundary by controlling the at least one wheel motor to move the robotic garden tool along the barrier in response to detecting the barrier based on the second obstacle signal. In addition to any combination of features described above, the first electronic processor may be configured to determine at least a portion of the first virtual boundary by recording a plurality of distance measurements and a plurality of angle measurements between the robotic garden tool and the barrier as the robotic garden tool moves along the barrier. In addition to any combination of features described above, the first electronic processor may be configured to determine at least a portion of the first virtual boundary by recording a plurality of first locations of the robotic garden tool as the robotic garden tool moves along the barrier. In addition to any combination of features described above, the first electronic processor may be configured to determine at least a portion of the first virtual boundary by determining the at least a portion of the first virtual boundary based on respective distance measurements of the plurality of distance measurements, respective angle measurements of the plurality of angle measurements, and respective first locations of the plurality of first locations. In addition to any combination of features described above, the first electronic processor may be configured to determine at least a portion of the first virtual boundary by generating the mapping information of the operating area. The mapping information may include the at least a portion of the first virtual boundary. In addition to any combination of features described above, the first electronic processor may be configured to determine at least a portion of the first virtual boundary by controlling the at least one wheel motor to move the robotic garden tool in the operating area to remain inside the first virtual boundary based on the mapping information.

Another embodiment includes a method of identifying an object within a map. The method may include controlling, with a first electronic processor of a robotic garden tool, at least one wheel motor to move the robotic garden tool within a first virtual boundary that defines an operating area of the robotic garden tool. The robotic garden tool may include a housing, a set of wheels coupled to the housing and configured to rotate to propel the robotic garden tool on an operating surface in the operating area, the at least one wheel motor coupled to one or more wheels of the set of wheels, the at least one wheel motor configured to drive rotation of the one or more wheels, and at least one sensor configured to generate signals associated with an object within the operating area. The method may include receiving, with the first electronic processor, an obstacle signal associated with an obstacle located within the operating area. The method may also include determining, with the first electronic processor, a first location of the robotic garden tool at a time corresponding to when the first electronic processor received the obstacle signal. The method may also include determining, with the first electronic processor, a second location of the obstacle based on the obstacle signal and the first location of the garden tool. The method may further include generating, with the first electronic processor, mapping information of the operating area that includes a second virtual boundary based on the second location of the obstacle. The method may further include controlling, with the first electronic processor, the at least one wheel motor to move the robotic garden tool in the operating area to remain outside of the second virtual boundary based on the mapping information.

In addition to any combination of features described above, the method may include controlling, with the first electronic processor, the at least one wheel motor to move the robotic garden tool toward the second location of the obstacle based on receiving an approximate location of the obstacle from an external device. The approximate location of the obstacle may be received by the external device via a first user input.

In addition to any combination of features described above, generating the mapping information that includes the second virtual boundary may include controlling, with the first electronic processor, the at least one wheel motor to move the robotic garden tool around a perimeter of the obstacle in response to detecting the obstacle based on the obstacle signal. In addition to any combination of features described above, generating the mapping information that includes the second virtual boundary includes recording, with the first electronic processor, a plurality of distance measurements and a plurality of angle measurements between the robotic garden tool and the obstacle as the robotic garden tool moves around the perimeter of the obstacle. In addition to any combination of features described above, generating the mapping information that includes the second virtual boundary includes recording, with the first electronic processor, a plurality of first locations of the robotic garden tool as the robotic garden tool moves around the perimeter of the obstacle. In addition to any combination of features described above, generating the mapping information that includes the second virtual boundary includes determining, with the first electronic processor, the second virtual boundary based on respective distance measurements of the plurality of distance measurements, respective angle measurements of the plurality of angle measurements, and respective first locations of the plurality of first locations.

In addition to any combination of features described above, the method may include transmitting, with the first electronic processor via a network interface, the mapping information to an external device for displaying of a map of the operating area by the external device. The map may include the second location of the obstacle, the second virtual boundary of the obstacle, or both the second location and the second virtual boundary.

In addition to any combination of features described above, the method may include identifying, with the first electronic processor, a type of obstacle of the obstacle based on the obstacle signal.

In addition to any combination of features described above, the obstacle may be a first obstacle that is a first type of obstacle. In addition to any combination of features described above, the mapping information may include a third virtual boundary based on a third location of a second obstacle that is a second type of obstacle different from the first type of obstacle. In addition to any combination of features described above, the method may include controlling, with the first electronic processor, the at least one wheel motor to move the robotic garden tool in the operating area to operate in a first manner nearby the second virtual boundary and operate in a second manner nearby the third virtual boundary. The first manner may be different than the second manner. In addition to any combination of features described above, the first manner of operation may be based on the first type of obstacle of the first obstacle, and the second manner of operation may be based on the second type of obstacle of the second obstacle.

In addition to any combination of features described above, controlling the at least one wheel motor to move the robotic garden tool in the operating area to operate in the first manner nearby the second virtual boundary and operate in the second manner nearby the third virtual boundary may include controlling, with the first electronic processor, an edge cutting motor of an edge cutter to be enabled as the robotic garden tool moves around the second virtual boundary; and controlling, with the first electronic processor, the edge cutting motor to be disabled as the robotic garden tool moves around the third virtual boundary.

In addition to any combination of features described above, the method may include determining at least a portion of the first virtual boundary by receiving, from the at least one sensor with the first electronic processor, a second obstacle signal associated with a barrier that at least partially defines the operating area. In addition to any combination of features described above, the method may include determining at least a portion of the first virtual boundary by controlling, with the first electronic processor, the at least one wheel motor to move the robotic garden tool along the barrier in response to detecting the barrier based on the second obstacle signal. In addition to any combination of features described above, the method may include determining at least a portion of the first virtual boundary by recording, with the first electronic processor, a plurality of distance measurements and a plurality of angle measurements between the robotic garden tool and the barrier as the robotic garden tool moves along the barrier. In addition to any combination of features described above, the method may include determining at least a portion of the first virtual boundary by recording, with the first electronic processor, a plurality of first locations of the robotic garden tool as the robotic garden tool moves along the barrier. In addition to any combination of features described above, the method may include determining at least a portion of the first virtual boundary by determining, with the first electronic processor, the at least a portion of the first virtual boundary based on respective distance measurements of the plurality of distance measurements, respective angle measurements of the plurality of angle measurements, and respective first locations of the plurality of first locations. In addition to any combination of features described above, the method may include determining at least a portion of the first virtual boundary by generating, with the first electronic processor, the mapping information of the operating area. The mapping information may include the at least a portion of the first virtual boundary. In addition to any combination of features described above, the method may include determining at least a portion of the first virtual boundary by controlling, with the first electronic processor, the at least one wheel motor to move the robotic garden tool in the operating area to remain inside the first virtual boundary based on the mapping information.

Other aspects of the disclosure will become apparent by consideration of the detailed description and accompanying drawings.

### BRIEF DESCRIPTION OF THE DRAWINGS

FIG. 1A illustrates a communication system including a robotic garden tool according to some example embodiments.
FIG. 1B illustrates an example implementation of the communication system of FIG. 1A according to some example embodiments.
FIG. 1C illustrates a bottom perspective view of the robotic garden tool of FIG. 1A according to some example embodiments.
FIG. 2 is a block diagram of the robotic garden tool of FIGS. 1A and 1B according to some example embodiments.
FIG. 3 is a block diagram of the external device of FIG. 1A according to some example embodiments.
FIG. 4 is a block diagram of the base station device of FIG. 1A according to some example embodiments.
FIG. 5 illustrates a flowchart of a method that may be performed by the robotic garden tool of FIG. 1A to create a virtual boundary for the robotic garden tool according to some example embodiments.
FIG. 6 illustrates an example use case of creation of virtual boundaries according to some example embodiments.

### DETAILED DESCRIPTION

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways. Also, it is to be understood that the phraseology and terminology used herein is for the purpose of description and should not be regarded as limiting. The use of "including," "comprising" or "having" and variations thereof herein is meant to encompass the items listed thereafter and equivalents thereof as well as additional items. The terms "mounted," "connected" and "coupled" are used broadly and encompass both direct and indirect mounting, connecting and coupling. Further, "connected" and "coupled" are not restricted to physical or mechanical connections or couplings, and can include electrical connections or couplings, whether direct or indirect.

It should be noted that a plurality of hardware and software based devices, as well as a plurality of different structural components may be utilized to implement the invention. Furthermore, and as described in subsequent paragraphs, the specific configurations illustrated in the drawings are intended to exemplify embodiments of the invention and that other alternative configurations are possible. The terms "processor," "central processing unit," and "CPU" are interchangeable unless otherwise stated. Where the terms "processor" or "central processing unit" or "CPU" are used as identifying a unit performing specific functions, it should be understood that, unless otherwise stated, those functions can be carried out by a single processor, or multiple processors arranged in any form, including parallel processors, serial processors, tandem processors or cloud processing/cloud computing configurations.

Throughout this application, the term "approximately" may be used to describe the dimensions of various components and/or paths of travel of a robotic garden tool. In some situations, the term "approximately" means that the described dimension is within 1% of the stated value, within 5% of the stated value, within 10% of the stated value, or the like. When the term "and/or" is used in this application, it is intended to include any combination of the listed components. For example, if a component includes A and/or B, the component may include solely A, solely B, or A and B.

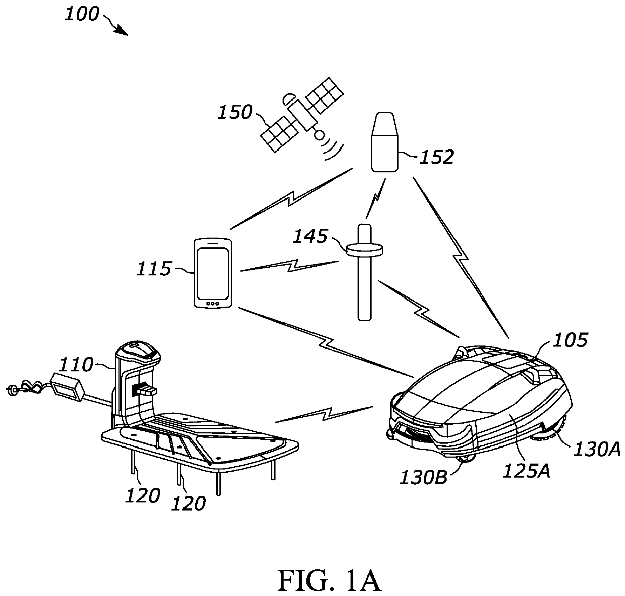

FIG. 1A illustrates a communication system 100 that may include a robotic garden tool 105 (e.g., a robotic lawn mower 105 that may also be referred to as a robotic mower 105), a docking station 110 for the robotic mower 105, an external device 115, a base station device 145, a satellite 150, and a server 152 according to some example embodiments. The robotic garden tool 105 is primarily described as being a robotic mower 105. However, in other embodiments, the robotic garden tool 105 may include a tool for sweeping debris, vacuuming debris, clearing debris, collecting debris, moving debris, etc. Debris may include plants (such as grass, leaves, flowers, stems, weeds, twigs, branches, etc., and clippings thereof), dust, dirt, jobsite debris, snow, and/or the like. For example, other implementations of the robotic garden tool 105 may include a vacuum cleaner, a trimmer, a string trimmer, a hedge trimmer, a sweeper, a cutter, a plow, a blower, a snow blower, etc.

In some embodiments, a lawn may include any type of property that includes grass, a crop, some other material to be trimmed, cleared, gathered, etc., and/or that includes some material to receive treatment from the robotic garden tool (e.g., fertilizer to treat grass in the lawn). In some embodiments, a lawn may include paved portions of a property (e.g., a driveway), for example, when the robotic garden tool is used for snow plowing/removal.

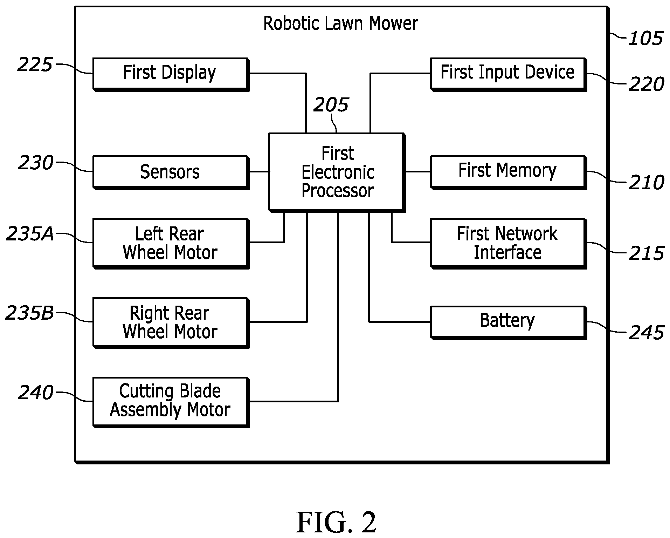

In some embodiments, the docking station 110 may be installed in a yard/lawn using stakes 120. The robotic mower 105 may be configured to mow the yard and dock at the docking station 110 in order to charge a battery 245 of the robotic mower 105 (see FIG. 2). In some embodiments, the docking station 110 is configured to make an electrical connection with a power supply (e.g., via a cord and plug connected to a wall outlet that is connected to a power grid) in order to provide charging current to the robotic mower 105 when the robotic mower 105 is electrically coupled with the docking station 110.

In some embodiments, the docking station 110 may also be electrically connected to a boundary cable (i.e., boundary wire). In some embodiments, the docking station 110 provides power to the boundary cable to control the boundary cable to provide/emit, for example, an electromagnetic signal that may be detected by the robotic mower 105. In some embodiments, the boundary cable may be any cable, wire, etc. that is configured to transmit a signal and that is configured to be installed on an operating surface (e.g., a yard including grass) in a discrete and unobtrusive manner (e.g., secured at the base of the blades of grass against the ground/soil in which the grass is growing to prevent the robotic mower 105 and other people or objects from being physically obstructed by the boundary cable). For example, a plurality of pegs/stakes may be used to pin the boundary cable to the ground/soil. As another example, the boundary cable may be buried in the ground/soil underneath the grass (e.g., if the boundary cable is installed when a plot of land is being developed). In some embodiments, in response to detecting the electromagnetic signal from the boundary cable, the robotic mower 105 is configured to control its movement such that the robotic mower 105 remains within a boundary defined by the boundary cable. For example, in response to detecting the boundary cable, the robotic mower 105 may be configured to stop moving forward and turn in a random direction to begin traveling in an approximately straight line until the robotic mower 105 again detects the boundary cable.

In some embodiments, the robotic mower 105 may include mapping capabilities, positioning tracking capabilities, and/or the like that allow the robotic mower 105 defined a boundary (e.g., a virtual boundary) of an operating area using the boundary cable. For example, the robotic mower 105 uses odometry sensors to determine a distance the robotic mower 105 has travelled based on how far each wheel has rotated and/or how fast each wheel is rotating and an inertial measurement unit (IMU) to determine a specific force, angular rate, and/or orientation of the robotic mower 105 traveling along the boundary wire. The distance and direction are used to create a virtual boundary that defines an operating area of the robotic mower 105. In some embodiments, the robotic mower 105 may create a virtual boundary using the boundary cable and one or more beacons (e.g., RFID tags) adjacent to the boundary cable to define an operating area of the robotic mower 105. For example, the robotic mower 105 uses positioning tracking capabilities while travelling to each beacon of a set of beacons adjacent to a boundary wire to create a virtual boundary that defines an operating area of the robotic mower 105. In some embodiments, the robotic mower 105 creates a virtual boundary using a global positioning system (GPS) module to track boundary coordinates while moving within an operating area proximate to the boundary wire. For example, a virtual boundary may be established by manually moving the robotic tool on a desired path (i.e., "dog walking") while the robotic tool stores the desired path.

In some embodiments, the robotic mower 105 does not operate in conjunction with a boundary cable. Rather, the robotic mower 105 may include mapping capabilities, positioning tracking capabilities, and/or the like that allow the robotic mower 105 to remain within a predefined boundary (e.g., a virtual boundary) without the use of the boundary cable. In some embodiments, the robotic mower 105 may determine its location (and/or may aid in allowing the base station device 145 and/or the external device 115 to determine their respective locations) by communicating with other devices such as the base station device 145 and/or the satellite 150 as described in detail below. For example, the robotic mower 105 and the base station device 145 may communicate with each other using a radio frequency (RF) communication protocol (e.g., WiFi^{™}, Bluetooth^{™}, Bluetooth^{™} Low Energy (BLE), and/or the like).

In some embodiments, the robotic mower 105 may use an external device to create a virtual boundary. For example, the robotic mower 105 receives a first location signal from a satellite and transmits calibration information regarding the first location signal to an external device. The robotic mower 105 may remain stationary to act as a first real-time kinematic global navigating satellite systems (RTK GNSS) base station with respect to the external device during creation of a virtual boundary by the external device as the external device is moved in the operating area. Creation/generation of a virtual boundary according to some example embodiments is also described in detail below.

In some embodiments, the docking station 110 includes a docking cable loop, a magnet configured to be sensed by a magnetic sensor of the robotic mower 105, and/or another transmitting device configured to emit a docking signal that may be detected by the robotic mower 105. For example, the docking signal may indicate that the robotic mower 105 is near the docking station 110 and may allow the robotic mower 105 to take certain actions in response thereto to, for example, dock the robotic mower 105 at the docking station 110.

As indicated in FIG. 1A, in some embodiments, the robotic mower 105 is configured to wirelessly communicate with the external device 115 and/or the base station device 145 when the robotic mower 105 is within communication range of the external device 115 and/or the base station device 145 (e.g., via Bluetooth^{™}, WiFi^{™}, or the like). The external device 115 may be, for example, a smart phone (as illustrated), a laptop computer, a tablet computer, a personal digital assistant (PDA), a wireless communication router that allows another external device 115 that is located remotely from the robotic mower 105 to communicate with the robotic mower 105, or another electronic device capable of communicating with the robotic mower 105. The external device 115 may generate a user interface and allow a user to access and interact with robotic mower information. The external device 115 may receive user inputs to determine operational parameters/instructions for the robotic mower 105, enable or disable features of the robotic mower 105, and the like. In some embodiments, the communication between the external device 115 and the robotic mower 105 may be wired (e.g., via a Universal Serial Bus (USB) cord configured to connect to respective USB ports of the external device 115 and the robotic mower 105).

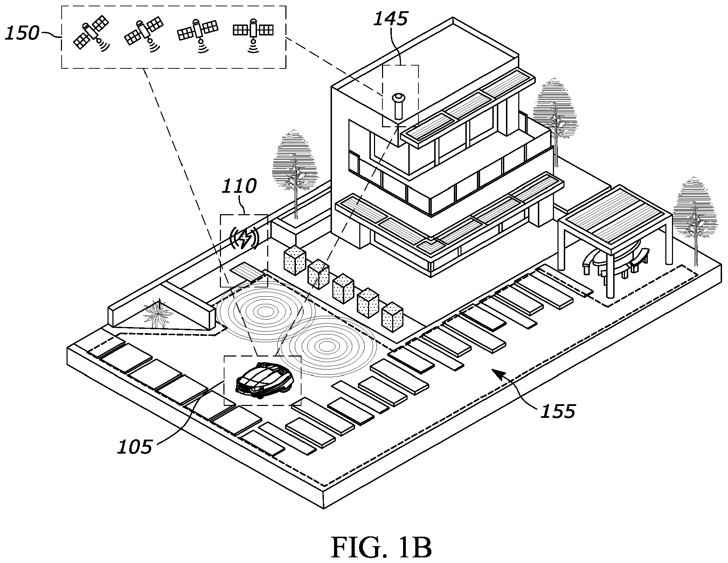

In some embodiments, the base station device 145 is considered an external device 115. The base station device 145 may be placed in a stationary manner at a base station location to aid the robotic mower 105 in determining a current location of the robotic mower 105 as the robotic mower 105 moves within an operating area as described in greater detail below. For example, the base station device 145 may be placed on a roof of a building adjacent to an operating area 155 where the robotic mower 105 performs a task (see FIG. 1B). As other examples, the base station device 145 may be located at a different location on a building or at a location within or near the operating area 155 (e.g., at the same location as the charging station 110, on a pole/stake that is inserted into the ground within or near the operating area 155, or the like). While the base station device 145 may be configured to remain stationary during operation of the robotic mower 105 within the operating area 155, in some embodiments, the base station device 145 may be removed from the base station location to define or revise a virtual boundary, to change the base station location when the robotic mower 105 is not operating, and/or the like.

As indicated by FIGS. 1A and 1B, in some embodiments, the robotic mower 105, the external device 115, and/or the base station device 145 are configured to wirelessly and bidirectionally communicate with each other and/or one or more satellites 150 and/or one or more servers 152. For example, the robotic mower 105, the external device 115, and/or the base station device 145 may include a global positioning system (GPS) receiver configured to communicate with one or more satellites 150 to determine a location of the respective robotic mower 105, the external device 115, and/or the base station device 145. As another example, the robotic mower 105, external device 115, and/or base station device 145 may transmit information to and/or receive information from the server 152, for example, over a cellular network. Additional details of communication between (i) the robotic mower 105, the external device 115, and/or the base station device 145 and (ii) the one or more satellites 150 and/or the one or more servers 152 are described below. While FIG. 1A illustrates one satellite 150 and one server 152, in some embodiments, the communication system 100 includes additional satellites 150 and/or servers 152. In some embodiments, the communication system 100 may not include any servers 152.

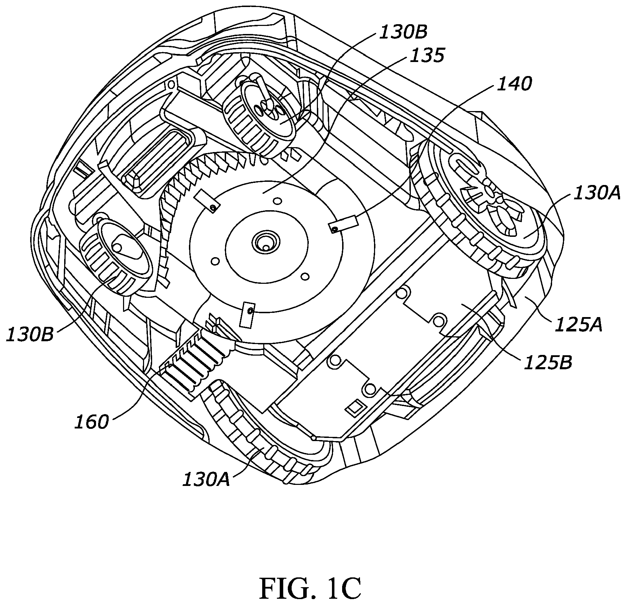

FIG. 1C illustrates a bottom perspective view of the robotic mower 105 according to some example embodiments. The robotic mower 105 may include a housing 125 that may include an outer housing 125A (i.e., outer housing shell) and an inner housing 125B. The outer housing 125A may be coupled to the inner housing 125B. The robotic mower 105 also may include wheels 130 (i.e., a set of wheels 130) coupled to the inner housing 125B and configured to rotate with respect to the housing 125 to propel the robotic mower 105 on an operating surface (e.g., a yard to be mowed). The wheels 130 may include motor-driven wheels 130A and non-motor-driven wheels 130B. In the embodiment shown in FIG. 1B, two rear wheels 130A are motor-driven wheels 130A while two front wheels 130B are non-motor-driven wheels 130B. In other embodiments, the robotic mower 105 may include a different wheel arrangement (e.g., a different number of total wheels, a different number of each type of wheel, different wheels being motor-driven or non-motor-driven, and/or the like). In some embodiments, the housing 125 may not include the outer housing 125A and the inner housing 125B. Rather, the housing 125 may include a single integrated body/housing to which the wheels 130 are attached.

In some embodiments, the robotic mower 105 includes a wheel motor 235 (see FIG. 2) coupled to one or more wheels 130 and configured to drive rotation of the one or more wheels 130. In some embodiments, the robotic mower 105 includes multiple wheel motors 235 where each wheel motor 235 is configured to drive rotation of a respective motor-driven wheel 130A (see FIG. 2).

In some embodiments, the robotic mower 105 includes a cutting blade assembly 135 coupled to the inner housing 125B and configured to rotate with respect to the housing 125 to cut grass on the operating surface. The cutting blade assembly 135 may include a rotating disc to which a plurality of cutting blades 140 configured to cut the grass are attached. In some embodiments, the robotic mower 105 includes a cutting blade assembly motor 240 (see FIG. 2) coupled to the inner housing 125B and to the cutting blade assembly 135. The cutting blade assembly motor 240 may be configured to drive rotation of the cutting blade assembly 135 to cut the grass on the operating surface.

In some embodiments, the robotic mower 105 may include an edge cutting blade assembly 160 coupled to the inner housing 125B and configured to rotate or reciprocate with respect to the housing 125 to cut grass on the operating surface adjacent to the housing 125. The edge cutting blade assembly 160 may include a rotating disc to which a plurality of cutting blades or strings configured to cut the grass are attached. In some instances and as shown in FIG. 1C, the edge cutting blade assembly 160 includes two reciprocating blades located on an outer edge of one side of the housing 125 to cut near an edge of the housing where the cutting blades 140 may not be able to cut. The reciprocating blades of the edge cutting assembly 160 may be housed inside a housing with slots/openings to allow grass into the slots/openings but to prevent larger objects from being received in the slots/openings. In some embodiments, the robotic mower 105 includes a separate edge cutting blade assembly motor (not shown) coupled to the inner housing 125B and to the edge cutting blade assembly 160. The edge cutting blade assembly motor may be configured to drive rotation of the edge cutting blade assembly 160 to cut the grass on the operating surface.

In some embodiments, the robotic mower 105 and/or the docking station 110 include additional components and functionality than is shown and described herein.

FIG. 2 is a block diagram of the robotic mower 105 according to some example embodiments. In the embodiment illustrated, the robotic mower 105 includes a first electronic processor 205 (for example, a microprocessor or other electronic device). The first electronic processor 205 includes input and output interfaces (not shown) and is electrically coupled to a first memory 210, a first network interface 215, an optional first input device 220, an optional display 225, one or more sensors 230, a left rear wheel motor 235A, a right rear wheel motor 235B, a cutting blade assembly motor 240, and a battery 245. In some embodiments, the robotic mower 105 includes fewer or additional components in configurations different from that illustrated in FIG. 2. For example, the robotic mower 105 may not include the first input device 220 and/or the first display 225. As another example, the robotic mower 105 may include a height adjustment motor configured to adjust a height of the cutting blade assembly 135. As yet another example, the robotic mower 105 may include additional sensors or fewer sensors than the sensors 230 described herein. In some embodiments, the robotic mower 105 performs functionality other than the functionality described below.

The first memory 210 may include read only memory (ROM), random access memory (RAM), other non-transitory computer-readable media, or a combination thereof. The first electronic processor 205 is configured to receive instructions and data from the first memory 210 and execute, among other things, the instructions. In particular, the first electronic processor 205 executes instructions stored in the first memory 210 to perform the methods described herein.

The first network interface 215 is configured to send data to and receive data from other devices in the communication system 100 (e.g., the external device 115, the base station device 145, the satellite 150, and/or the server 152). In some embodiments, the first network interface 215 includes one or more transceivers for wirelessly communicating with the external device 115, the docking station 110, and/or the base station device 145 (e.g., a first RF transceiver configured to communicate via Bluetooth^{™}, WiFi^{™}, or the like). The first network interface 215 may include an additional transceiver for wirelessly communicating with the server 152 via, for example, cellular communication. The first network interface 215 may also include a first GPS receiver (e.g., a first real-time kinematic global navigating satellite systems (RTK GNSS) receiver) configured to receive a location signal from one or more satellites 150. In some embodiments, at least some of the transceivers and/or receivers of the robotic mower 105 may be combined or share some elements (e.g., an antenna and/or other hardware). Alternatively or additionally, the first network interface 215 may include a connector or port for receiving a wired connection to the external device 115, such as USB cable.

The first user input device 220 is configured to allow the first electronic processor 205 to receive a user input from a user to, for example, set/adjust an operational parameter of the robotic mower 105. The first display 225 is configured to display a user interface to the user. Similar to the user interface of the external device 115 described previously herein, the user interface displayed on the first display 225 may allow the user to access and interact with robotic mower information. In some embodiments, the first display 225 may also act as the first input device 220. For example, a touch sensitive input interface may be incorporated into the first display 225 to allow the user to interact with content provided on the first display 225. The first display 225 may be a liquid crystal display (LCD) screen, an organic light emitting display (OLED) display screen, or an E-ink display. In some embodiments, the first display 225 includes future-developed display technologies.

In some embodiments, the first electronic processor 205 is in communication with a plurality of sensors 230 that may include electromagnetic field sensors, radio frequency sensors (e.g., radio frequency identification (RFID) interrogators/sensors), Hall sensors, other magnetic sensors, the first network interface 215, IMU sensors, and/or the like. In some embodiments, the first electronic processor 205 is in communication with a plurality of sensors 230 that may include a millimeter wave radar sensor, an optical camera, an infrared sensor, or combinations thereof.

In some embodiments, the inner housing 125B includes at least two boundary cable sensors in the form of electromagnetic field sensors configured to detect an electromagnetic signal being emitted by the boundary cable. For example, the electromagnetic field sensors may be able to detect a strength and/or a polarity of the electromagnetic signal from the boundary cable.

In some embodiments, the inner housing 125B includes an odometry sensor (e.g., one or more Hall sensors or other types of sensors) for each motor-driven wheel 130A. Data from the odometry sensors may be used by the first electronic processor 205 to determine how far each wheel 130A has rotated and/or how fast each wheel is rotating in order to accurately control movement (e.g., turning capabilities) of the robotic mower 105. For example, the first electronic processor 205 may control the robotic mower 105 to move in an approximately straight line by controlling both of the wheel motors 235A and 235B to rotate at approximately the same speed. As another example, the first electronic processor 205 may control the robotic mower 105 to turn and/or pivot in a certain direction by controlling one of the wheel motors 235A or 235B to rotate faster than or in an opposite direction than the other of the wheel motors 235A or 235B. Similarly, rotating only one of the wheel motors 235A or 235B while the other wheel motor 235A or 235B is not rotated should result in the robotic mower 105 turning/pivoting.

In some embodiments, the inner housing 125B includes a cutting blade assembly motor sensor (e.g., one or more Hall sensors or other types of sensors). Data from the cutting blade assembly motor sensor may be used by the first electronic processor 205 to determine how fast the cutting blade assembly 135 is rotating.

In some embodiments, the battery 245 provides power to the first electronic processor 205 and to other components of the robotic mower 105 such as the motors 235A, 235B, 240 and the first display 225. In some embodiments, power may be supplied to other components besides the first electronic processor 205 through the first electronic processor 205 or directly to the other components. In some embodiments, when power is provided directly from the battery 245 to the other components, the first electronic processor 205 may control whether power is provided to one or more of the other components using, for example, a respective switch (e.g., a field-effect transistor) or a respective switching network including multiple switches. In some embodiments, the robotic mower 105 includes active and/or passive conditioning circuitry (e.g., voltage step-down controllers, voltage converters, rectifiers, filters, etc.) to regulate or control the power received by the components of the robotic mower 105 (e.g., the first electronic processor 205, the motors, 235A, 235B, 240, etc.) from the battery 245. In some embodiments, the battery 245 is a removable battery pack. In some embodiments, the battery 245 is configured to receive charging current from the docking station 110 when the robotic mower 105 is docked at the docking station 110 and electrically connected thereto.

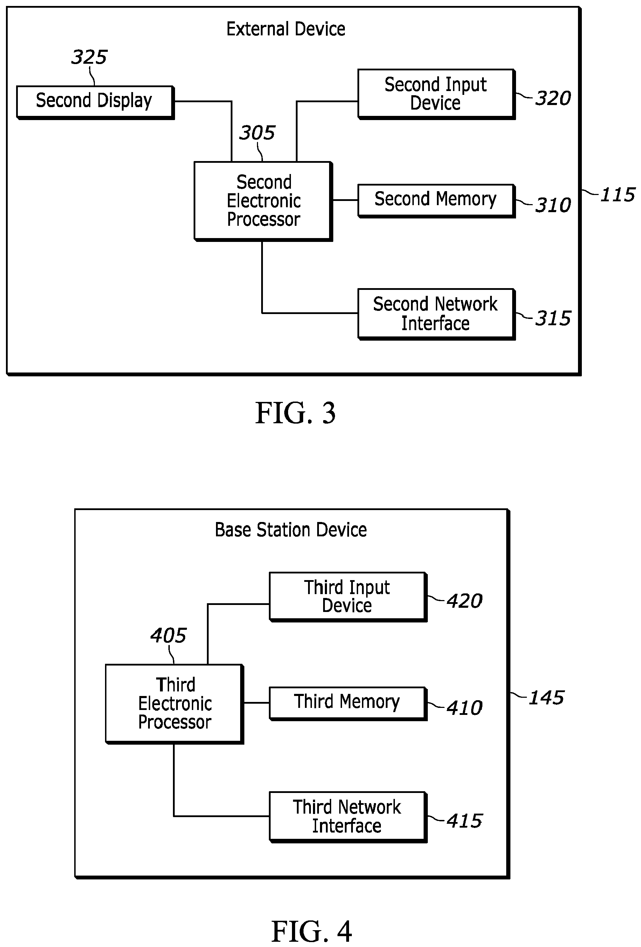

FIG. 3 is a block diagram of the external device 115 according to some example embodiments. In the example shown, the external device 115 includes a second electronic processor 305 electrically connected to a second memory 310, a second network interface 315, a second user input device 320, and a second display 325. These components are similar to the like-named components of the robotic mower 105 explained above with respect to FIG. 2 and function in a similar manner as described above. For example, the second display 325 may also function as an input device (e.g., when the second display 325 is a touchscreen). In some embodiments, the second network interface 315 includes one or more transceivers for wirelessly communicating with the robotic mower 105 (e.g., a second RF transceiver configured to communicate via Bluetooth^{™}, WiFi^{™}, or the like). The second network interface 315 may include an additional transceiver for wirelessly communicating with the server 152 via, for example, cellular communication. The second network interface 315 may also include a second GPS receiver (e.g., a second RTK GNSS receiver) configured to receive a location signal from one or more satellites 150. In some embodiments, at least some of the transceivers and/or receivers of the external device 115 may be combined or share some elements (e.g., an antenna and/or other hardware). In some embodiments, the second electronic processor 305 sends data to and receives data from the robotic mower 105 and/or other devices of the communication system 100 via the second network interface 315.

In some embodiments, the external device 115 includes fewer or additional components in configurations different from that illustrated in FIG. 3. For example, the external device 115 may include a battery, a camera, or the like. In some embodiments, the external device 115 performs functionality other than the functionality described below.

FIG. 4 is a block diagram of the base station device 145 according to some example embodiments. In the example shown, the base station device 145 includes a third electronic processor 405 electrically connected to a third memory 410, a third network interface 415, and a third user input device 420. These components are similar to the like-named components of the robotic mower 105 explained above with respect to FIG. 2 and function in a similar manner as described above. In some embodiments, the third network interface 415 includes one or more transceivers for wirelessly communicating information (e.g., calibration information) to the robotic mower 105 (e.g., a third RF transceiver configured to communicate via Bluetooth^{™}, WiFi^{™}, or the like) to aid the robotic mower 105 in determining a current location of the robotic mower 105 during a mowing operation as explained in greater detail below. The third network interface 415 may include an additional transceiver for wirelessly communicating with the server 152 via, for example, cellular communication. The third network interface 415 may also include a third GPS receiver (e.g., a third RTK GNSS receiver) configured to receive a location signal from one or more satellites 150. In some embodiments, at least some of the transceivers and/or receivers of the base station device 145 may be combined or share some elements (e.g., an antenna and/or other hardware). In some embodiments, the third electronic processor 405 sends data to and receives data from the robotic mower 105 and/or other devices of the communication system 100 via the third network interface 415. In some embodiments, the third input device 420 is a button or switch configured to be actuated by a user.

In some embodiments, the base station device 145 includes fewer or additional components in configurations different from that illustrated in FIG. 4. For example, the base station device 145 may include a battery, a display or indicator (e.g., a light emitting diode) to provide information to the user, or the like. As another example, the base station device 145 may not include the input device 420 in some embodiments. In some embodiments, the base station device 145 performs functionality other than the functionality described below.

In some embodiments, the satellite 150 and the server 152 include similar elements as the elements described above with respect to the devices 105, 115, and 145 that function in a similar manner. For example, the satellite 150 and the server 152 may each include an electronic processor, a memory, and a network interface, among other elements.

In some embodiments, the robotic mower 105 travels within a virtual boundary of the operating area 155 to execute a task (e.g., mowing a lawn). The robotic mower 105 may travel randomly within the operating area 155 defined by the virtual boundary. For example, the robotic mower 105 may be configured to travel in an approximate straight line until the robotic mower 105 determines that it has reached the virtual boundary. In response to detecting the virtual boundary, the robotic mower 105 may be configured to turn in a random direction and continue traveling in an approximate straight line along a new path until the robotic mower 105 again determines that it has reached the virtual boundary, at which point this process repeats. In some embodiments, the robotic mower 105 may travel in a predetermined pattern within the operating area 155 defined by the virtual boundary (e.g., in adjacent rows or columns between sides of the virtual boundary) to more efficiently and evenly mow the lawn within the operating area 155. In such embodiments, the robotic mower 105 may determine and keep track of its current location within the operating area 155.

For example, as indicated in FIGS. 1A and 1B, the robotic mower 105 and the stationary base station device 145 may both be configured to communicate with each other and with one or more satellites 150. In some embodiments, both the robotic mower 105 and the base station device 145 may include an RTK GNSS receiver. During a mowing operation, as the robotic mower 105 moves within the operating area 155, the robotic mower 105 may determine its current location based on a location signal received, via its RTK GNSS receiver, from the one or more satellites 150 and based on calibration information received from the base station device 145 regarding the same location signal received by the RTK GNSS receiver of the stationary base station device 145.

For example, during a mowing operation, the base station device 145 may be stationary (i.e., acting as a stationary base station) while the robotic mower 105 moves within the operating area 155. Both the robotic mower 105 and the base station device 145 may receive one or more location signals from one or more satellites 150. The base station device 145 may determine calibration information regarding the received location signal such as phase information of the location signal received by the base station device 145. The base station device 145 may transmit the calibration information to the robotic mower 105 that received the same one or more location signals from the one or more satellites 150. The robotic mower 105 may then compare the phase information of the location signal received by the base station device 145 with the phase information of the location signal received by the robotic mower 105 to aid the robotic mower 105 in determining the current location of the robotic mower 105 (e.g., using RTK GNSS principles). Accordingly, the stationary base station device 145 provides a reference for the robotic mower 105 to more accurately determine the location of the robotic mower 105 than if the robotic mower 105 determined its location based solely on the location signal received from the one or more satellites 150. More accurately determining the location of the robotic mower 105 allows the robotic mower 105 to better navigate itself within the operating area 155 (e.g., within or along a virtual boundary).

There are a number of existing manners of creating/generating a virtual boundary for a robotic tool. For example, a virtual boundary may be established by manually moving the robotic tool on a desired path (i.e., "dog walking") while the robotic tool stores the desired path. However, this method is not very efficient because the user has to manually move the robotic tool around an operating area. As another example, a virtual boundary may be created automatically by the robotic tool randomly moving on an operating surface and collecting a plurality of trajectories as it randomly moves. However, this method requires complex calculations and may not accurately generate a virtual boundary in many situations such as for a lawn with water areas (e.g., a lake or pond) or other segmented/separated areas and does not consider generating virtual boundaries for objects within the virtual boundary. Accordingly, there is a technological problem with respect to creating accurate virtual boundaries for a robotic garden tool in an efficient manner that is not burdensome to the user.

The systems, methods, and devices described herein address the above-noted technological problem by using the robotic mower 105 to determine an accurate location of partially or wholly enclosed operating areas and/or objects within the operating areas to create a virtual boundary included in mapping information that is used to control the robotic mower 105. Additionally, the systems, methods, and devices described herein use the robotic mower 105 and/or a device utilized by a user (e.g., a smart phone 115) to create the virtual boundary. Embodiments described herein enable more efficient creation of the virtual boundary (and obstacle/object virtual boundaries within an outer virtual boundary) because, for example, the robotic mower 105 can identify and map the location of the obstacles/objects. Additionally, embodiments described herein enable more efficient creation of path planning by enabling the robotic mower 105 to plan paths within the operating environment circumventing an obstacle without triggering an obstacle clearance algorithm, which improves traveling and mowing efficiency.

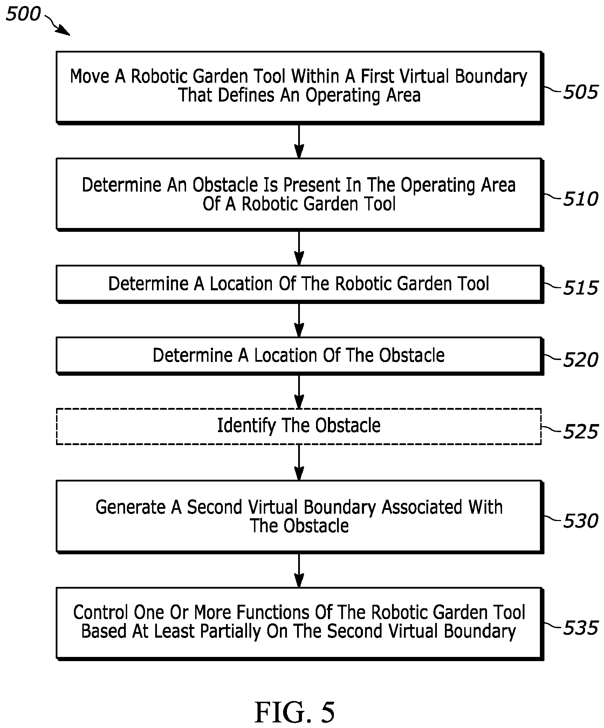

FIG. 5 illustrates a flowchart of a method 500 that may be performed by the first electronic processor 205 of the robotic mower 105 to create a virtual boundary to confine or limit the robotic mower 105 (e.g., an obstacle boundary around an obstacle to prevent the robotic mower 105 from entering an area defined/occupied by the obstacle. While a particular order of processing steps, signal receptions, and/or signal transmissions is indicated in FIG. 5 as an example, timing and ordering of such steps, receptions, and transmissions may vary where appropriate without negating the purpose and advantages of the examples set forth in detail throughout the remainder of this disclosure. The explanation below refers primarily to the robotic mower 105 (and in some instances, the external device 115) as the device that perform steps of the method 500 in order to create the virtual boundary.

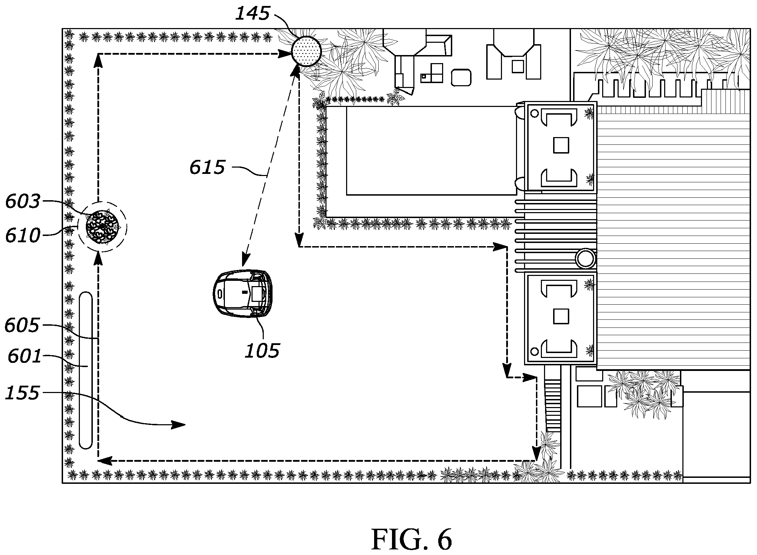

At block 505, the first electronic processor 205 of the robotic mower 105 controls operation of the at least one wheel motor 235 to control movement of the robotic mower 105 within a first boundary that defines the operating area 155. For example, the first electronic processor 205 may control the robotic mower 105 while moving in the operating area 155. In some embodiments, the robotic mower 105 moves in the operating area 155 while remaining inside a first virtual boundary 605 (e.g., see FIG. 6).

At block 510, the first electronic processor 205 receives an obstacle signal associated with an obstacle located within the operating area 155. The obstacle signal is received from the one or more of the sensors 230. For example, the first electronic processor 205 uses a signal from a millimeter wave radar sensor, an ultrasonic sensor, a laser imaging, detection, and ranging (LIDAR) sensor, a camera, another type of distance determining sensor, or a combination thereof (all of which may be sensors 230) to determine that an obstacle is proximate to the robotic mower 105. In some embodiments, the first electronic processor 205 receives via the first network interface 215 an approximate location of an obstacle from the external device 115. The approximate location corresponds to a user selected location in a map of the operating area 155 displayed on the external device 115. In such embodiments, the first electronic processor 205 may control movement of the robotic mower 105 to the approximate location within the operating area 155 to detect the obstacle.

At block 515, the first electronic processor 205 determines a location of the robotic mower 105. The location of the robotic mower 105 is associated with a time that corresponds to when the first electronic processor 205 determines the presence of the obstacle as discussed above at block 510. The first electronic processor 205 can determine the location of the robotic mower 105 using various methods, such as, for example, a GPS module, satellites, boundary wires, beacons, odometry, or the like, or a combination thereof. In some instances, the first electronic processor 205 may determine the location of the robotic mower 105 using real-time kinematic global navigating satellite systems RTK GNSS. For example, as indicated in FIGS. 1A and 1B, the robotic mower 105 and the stationary base station device 145 may both be configured to communicate with each other and with one or more satellites 150. In some embodiments, both the robotic mower 105 and the base station device 145 may include an RTK GNSS receiver. During a mowing operation, as the robotic mower 105 moves within the operating area 155, the robotic mower 105 may determine its current location based on a location signal received, via its RTK GNSS receiver, from the one or more satellites 150 and based on calibration information received from the base station device 145 regarding the same location signals received by the RTK GNSS receiver of the stationary base station device 145 (e.g., from four or more common satellites 150).

At block 520, the first electronic processor 205 determines a location of the detected obstacle. The location of the detected obstacle may be determined using the location of the robotic mower 105. In some embodiments, the first electronic processor 205 uses the sensors 230 to determine the location of the detected obstacle. For example, the first electronic processor 205 receives a signal that indicates a distance of the detected obstacle (i.e., distance from the location of the mower to the object) from a distance determining sensor 230 (examples provided previously herein) of the robotic mower 105. The first electronic processor 205 may use the location of the robotic mower 105 and the distance from the location of the robotic mower 105 to the object to determine a second location of the detected obstacle.

At block 525, the first electronic processor 205 may optionally identify the detected obstacle using the obstacle signal from the sensor(s) 230 that detected the detected obstacle. For example, the obstacle signal may include images, dimensions, and/or material properties (e.g., a type of material that the obstacle is made of) associated with the detected obstacle. In some embodiments, the first electronic processor 205 may determine a type of obstacle associated with the detected obstacle using the obstacle signal from the sensor(s) 230. For example, the type of obstacle may include a determination of whether the detected obstacle is a stationary or non-stationary object. In some implementations, the robotic mower 105 includes an artificial intelligence system that may utilize a machine learning algorithm and/or one or more neural networks that utilize the obstacle signal to perform one or more tasks, such as, object classification, visual recognition, or the like. The first electronic processor 205 may input images and/or dimensions into the artificial intelligence system and utilize the output of the artificial intelligence system to determine an object type for the detected obstacle. Additionally, the first electronic processor 205 may transmit the object type to the external device 115 via the first network interface 215 for user confirmation. The first electronic processor 205 may receive via the first network interface 215 an indication corresponding to whether the type of obstacle of the detected obstacle was correctly identified. In some embodiments, the first electronic processor 205 may receive, via the first network interface 215, a type of obstacle of the detected obstacle from the external device 115. The type of obstacle of the detected obstacle is provided by the external device 115 from the user via a user input received via the second input device 320. As indicated by the dashed outline in FIG. 5, block 525 may be optionally performed by the first electronic processor 205 in some instances but may not be performed in other instances.

In some instances, the first electronic processor 205 may optionally use signals received from the sensor(s) 230 (e.g., from a millimeter wave radar sensor or camera) to detect which parts of a ground surface on which the robotic mower 105 is traveling have grass. The first electronic processor 205 also may optionally determine a height of the grass at various parts of the ground surface. This information can be stored in the first memory 210 and/or transmitted to the external device 115 to be shown on a map of the operating area 155 (e.g., to allow a user to view a height of the grass at various parts of the operating area 155).

At block 530, the first electronic processor 205 may generate and store, in the first memory 210, second virtual boundary information associated with a second virtual boundary around the detected obstacle and/or a representation of the detected obstacle. To create the second boundary, the first electronic processor 205 may control operation of the at least one wheel motor 235 to control movement of the robotic mower 105 around a perimeter of the obstacle using the obstacle signal and the sensors 235. While the robotic mower 105 moves around the perimeter of the obstacle, the first electronic processor 205 may store the output of the sensors 235 in the first memory 210. For example, the output may include a plurality of distance measurements and/or a plurality of angle measurements between the robotic mower 105 and the detected obstacle. The first electronic processor 205 may also store a plurality of first locations of the robotic mower 10 in the first memory 210 as the robotic mower 105 moves around the perimeter of the detected obstacle. The first electronic processor 205 may create the second boundary using the distance measurements, the angle measurements, the first locations, or a combination thereof.

When generating the second virtual boundary associated with the obstacle, in some instances, the first electronic processor 205 may generate mapping information of the operating area 155 from the first memory 210. The mapping information is information indicative of the second virtual boundary. In some embodiments, the first electronic processor 205 uses information associated with the second location of the detected obstacle to create the mapping information for a map of the operating area 155. In some embodiments, the first electronic processor 205 may transmit, via the first network interface 215, the mapping information to the external device 115 for displaying on a map of the operating area 155 on a second display 325 of the external device 115. The map may include the second location of the detected obstacle, the second virtual boundary around the detected obstacle, or a combination thereof.

At block 535, the first electronic processor 205 controls one or more functions of the robotic mower 105 within the operating area 155 based at least partially on the second virtual boundary (e.g., according to the mapping information including the second virtual boundary). In some embodiments, at block 535, the electronic processor 205 can control the at least one wheel motor 235, the cutting blade assembly motor 240, the edge blade assembly motor, the like, or a combination thereof. In some embodiments, at block 535, the electronic processor 205 may control operation of the at least one wheel motor 235 to control movement of the robotic mower 105 to remain within a first virtual boundary that defines the operating area 155 and to remain outside of the second virtual boundary that defines the perimeter of the detected obstacle using the mapping information.

In some embodiments, the electronic processor 205 may determine that the map may include at least two detected obstacles and at least three boundaries, with the second boundary and the third boundary associated with respective detected obstacles. Additionally, the at least two detected obstacles are different types of obstacles. In such embodiments, the electronic processor 205 may utilize the first memory 210 to determine a manner of operation associated with each obstacle type and control the robotic mower accordingly. For example, a first manner of operation associated with a first obstacle type is includes enabling an edge cutting motor of the robotic mower 105 while the robotic mower 105 move around the first detected obstacle. In this example, a second manner of operation associated with a second obstacle type is associated with disabling an edge cutting motor of the robotic mower 105 while the robotic mower 105 moves around the second detected obstacle. As another example, the first electronic processor 205 may control the robotic mower 105 to move along an entire perimeter of some obstacles (e.g., trees) while not doing so for other obstacles (e.g., flower beds). As a continuation of this example, the first electronic processor 205 may disable all cutting blade motors of the robotic mower 105 when the robotic mower 105 is near some obstacles (e.g., flower beds or other sensitive obstacles) while the robotic mower 105 may not disable at least some of the cutting blade motors of the robotic mower 105 when the robotic mower 105 is near other obstacles (e.g., trees and bushes). In other words, at block 535, the first electronic processor 205 may be configured to control the robotic mower 105 to operate differently when the robotic mower 105 detects and/or is nearby different types of obstacles. In some instances, the behavior/manner of operation for each obstacle may be selected by via user input on the external device 115 and transmitted to the robotic mower 105 for storage in the first memory 210 for use during operation.

In some instances, at block 535, the first electronic processor 205 may determine a planned route for the robotic mower 105 to traverse within the operating area 155 while performing a task. In some embodiments, the first electronic processor 205 may generate a set of navigational instructions to control the at least one wheel motor 235 to move the robotic mower 105 in the operating area 155 to remain outside of the second virtual boundary and within the first virtual boundary.

In another embodiment, the robotic mower 105 may be used to determine at least a portion of the first virtual boundary (e.g., an outer perimeter of the operating area 155 within which the robotic mower 105 is configured to operate). In some instances of such an embodiment, the electronic processor 205 may utilize the robotic mower 105 to create a portion of the first boundary (e.g., an outer boundary) associated with the operating area 155 using a detected obstacle. The electronic processor 205 receives from the sensors 230, a second obstacle signal associated with a second obstacle (e.g., a barrier such as a fence, retaining wall, etc.) that at least partially defines the operating area 155. For example, the robotic mower 10 uses a millimeter wave radar sensor (i.e., an example of one of the sensors 230) to detect a barrier (e.g., the second obstacle) while moving adjacent to the barrier. After receiving the second obstacle signal, the electronic processor 205 controls the at least one wheel motor 235 to move the robotic mower 105 adjacent to second obstacle. The electronic processor 205 stores in the first memory 210 a plurality of distance measurements and/or a plurality of angle measurements between the robotic mower 105 and the second obstacle as the robotic mower 105 moves along the second obstacle. Additionally, the first electronic processor 205 stores in the first memory 210 a plurality of first locations of the robotic mower 105. For example, the robotic mower 105 stores, in the first memory 210, coordinates (e.g., positions and times) from an RTK GNSS receiver of the robotic mower 105 as the robotic mower 10 moves along the barrier. The robotic mower 105 also determines and stores, in the first memory 210, a position vector between the robotic mower 105 and the barrier. In some embodiments, the first electronic processor 205 may determine at least a portion of the first boundary of the operating area 155 based on the distance measurements, angle measurements, first locations, or a combination thereof (e.g., based on the position vectors). In some embodiments, the first electronic processor 205 generates mapping information of the operating area 155 using information associated with the portion of the first virtual boundary that corresponds to the second obstacle (i.e., the barrier). The mapping information includes the at least a portion of the first virtual boundary. In some embodiments, at block 535, the first electronic processor 205 controls the at least one wheel motor 235 to move the robotic mower 105 in the operating area 155 to remain inside the first virtual boundary based on the mapping information associated with second obstacle (i.e., the barrier). In instances in which the operating area 155 is not fully enclosed by second obstacles/barriers for the robotic mower 105 to follow, the above-noted method may be used in conjunction with other virtual boundary creation methods (e.g., user dog walking of the robotic mower 105 along a desired portion of the boundary) for portions of the desired boundary that do not include obstacles/barriers.

FIG. 6 is an illustration of an operating environment of the robotic mower 105. The operating environment may include the robotic mower 105, the base station device 145, the operating area 155, a first object 601, a second object 603, the first virtual boundary 605, a second virtual boundary 610, and a transmission 615. The first object 601 is an obstacle within an operating environment of the robotic mower 105. The first object 601 may wholly or partially define the operating area 155 of the robotic mower 105. The second object 603 is an obstacle within the operating area 155 of the robotic mower 105. The first virtual boundary 605 is illustrated as dashed line around a perimeter of the lawn that creates a virtual boundary that defines the operating area 155. The second virtual boundary 610 is illustrated as dashed line around the perimeter of the second object 603 that creates a virtual boundary within the operating area 155 that defines an area that the robotic mower 105 is restricted from entering. Although the second virtual boundary 610 is shown near the edge of the operating area 155, one or more other virtual boundaries may be located around obstacles near the center of the operating area 155 (e.g., island-type obstacles). The transmission 615 illustrated as dashed line from the robotic mower 105 to the base station device 145 may represent the transmission of location information/calibration information to/from the base station device 145 to allow for more precise location tracking of the robotic mower 105 (e.g., the robotic mower 105 tracking it location using RTK GNSS principles). However, the transmission 615 may also represent communications to/from multiple devices of the communication system 100 as described above (see. FIGS. 1A and 1B).

In some embodiments, the robotic mower 105 moves along a boundary of the lawn using detected objects and/or location other methodologies of the robotic mower 105 to define operating area 155 to create the virtual boundary. Once the virtual boundary is created as explained in further detail below, the robotic mower 105 is configured to be confined by the first virtual boundary 605 to remain in the operating area 155 during operation of the robotic mower 105 to mow the lawn.

In some embodiments, the method 500 may be repeated to generate more than one virtual boundary. For example, the first virtual boundary 605 may be created at an outer edge of an operating area 155 to define the operating area 155 that the robotic mower 105 should operate within. One or more additional virtual boundaries may be created in a similar manner within the first virtual boundary 605 to, for example, surround objects/areas within the main virtual boundary in which the robotic mower 105 should not operate. For example, such objects/areas such as the second virtual boundary 610 may include one or more trees, a swimming pool, a boundary of a garden, flower bed, etc., or the like. As noted above, in some embodiments, the second electronic processor 305 of the smart phone 115 may receive a user input via the second display 325 that indicates whether certain mapping information of a virtual boundary (e.g., additional virtual boundaries) in a map correspond to obstacles within the first virtual boundary 605. Additionally or alternatively, the device generating the virtual boundaries may determine that an additional virtual boundary located within the first virtual boundary 605. In response to this determination and based on an assumption that the user desires to define a "keep-out" zone, the device generating the virtual boundaries may generate the additional virtual boundary such that the robotic mower 105 is configured to stay out of a second area (e.g., the second virtual boundary 610) within the additional virtual boundary (e.g., the first virtual boundary 605). In other words, the virtual boundaries may be generated such that the robotic mower 105 stays within the first virtual boundary 605 and outside of the additional virtual boundary. This area between the virtual boundaries where the robotic mower 105 is configured to travel may be referred to as the operating area 155 in some embodiments.

The server 152, the electronic processor 205, 305, 405 of any device, or a combination thereof may generate the virtual boundary 610 using the mapping information gathered and/or determined by the robotic mower 105. For example, the robotic mower 105 may transmit mapping information to a smart phone 115 or to the server 152 such that any combination of these devices may generate the virtual boundary 610 based on the mapping information (and optionally based on information received via user input on the external device 115, such as information indicating a type of obstacle and/or a manner of operation for the robotic mower 105 nearby the obstacle).

In some embodiments, a graphical user interface (GUI) on the second display 325 may display a user-selectable button that enables/disables the robotic mower 105 to store mapping information. For example, the smart phone 115 may transmit commands to the robotic mower 105 via an RF transceiver of the second network interface 315 of the smart phone 115.

When the virtual boundary 610 is generated by a device besides the robotic mower 105, the device that generated the virtual boundary 610 may transmit information indicative of the virtual boundary 610 to the robotic mower 105. The robotic mower 105 (specifically, the first electronic processor 205) may be configured to use the information indicative of the virtual boundary 610 and a determined current location of the robotic mower 105 to control the robotic mower 105 to remain in the operating area 155 during operation of the robotic mower 105 (e.g., during a mowing operation) and to avoid obstacles and/or operate in accordance with selected respective manners of operation when the robotic mower 105 is nearby each obstacle.

The embodiments described above and illustrated in the figures are presented by way of example only and are not intended as a limitation upon the concepts and principles of the present invention. As such, it will be appreciated that various changes in the elements and their configuration and arrangement are possible without departing from the spirit and scope of the present invention.

## Claims

1. A robotic garden tool comprising:
a housing,
a set of wheels coupled to the housing and configured to rotate to propel the robotic garden tool on an operating surface in an operating area,
at least one wheel motor coupled to one or more wheels of the set of wheels, the at least one wheel motor configured to drive rotation of the one or more wheels,
at least one sensor configured to generate signals associated with an object within the operating area, and
a first electronic processor configured to
control the at least one wheel motor to move the robotic garden tool within a first virtual boundary that defines the operating area,
receive, from the at least one sensor, an obstacle signal associated with an obstacle located within the operating area,
determine a first location of the robotic garden tool at a time corresponding to when the first electronic processor received the obstacle signal,
determine a second location of the obstacle based on the obstacle signal and the first location of the garden tool,
generate mapping information of the operating area that includes a second virtual boundary based on the second location of the obstacle, and
control the at least one wheel motor to move the robotic garden tool in the operating area to remain outside of the second virtual boundary based on the mapping information.

2. The robotic garden tool of claim 1, wherein the first electronic processor is configured to control the at least one wheel motor to move the robotic garden tool toward the second location of the obstacle based on receiving an approximate location of the obstacle from an external device, the approximate location of the obstacle being received by the external device via a first user input.

3. The robotic garden tool of claim 1, wherein the first electronic processor is configured to generate the mapping information that includes the second virtual boundary by:
controlling the at least one wheel motor to move the robotic garden tool around a perimeter of the obstacle in response to detecting the obstacle based on the obstacle signal;
recording a plurality of distance measurements and a plurality of angle measurements between the robotic garden tool and the obstacle as the robotic garden tool moves around the perimeter of the obstacle;
recording a plurality of first locations of the robotic garden tool as the robotic garden tool moves around the perimeter of the obstacle; and
determining the second virtual boundary based on respective distance measurements of the plurality of distance measurements, respective angle measurements of the plurality of angle measurements, and respective first locations of the plurality of first locations;
and optionally
wherein the at least one sensor includes at least one selected from the group consisting of a millimeter wave radar sensor, an optical camera, an infrared sensor, or combinations thereof;
and optionally
further comprising a network interface configured to communicate with an external device;
wherein the first electronic processor is configured to transmit, via the network interface, the mapping information to the external device for displaying of a map of the operating area by the external device, wherein the map includes the second location of the obstacle, the second virtual boundary of the obstacle, or both the second location and the second virtual boundary.

4. The robotic garden tool of claim 1, wherein the first electronic processor is configured to identify a type of obstacle of the obstacle based on the obstacle signal.

5. The robotic garden tool of claim 4, wherein the first electronic processor is configured to:
transmit, via a network interface of the robotic garden tool, the type of obstacle of the obstacle to an external device; and
receive, via the network interface and from the external device, an indication of whether the type of obstacle of the obstacle was correctly identified by the first electronic processor, wherein the indication is received by the external device via a first user input.

6. The robotic garden tool of claim 4, wherein the first electronic processor is configured to identify the type of obstacle of the obstacle using a machine learning algorithm of an artificial intelligence system to analyze the obstacle signal, wherein the artificial intelligence system includes one or more neural networks.

7. The robotic garden tool of claim 1, wherein the first electronic processor is configured to receive, via a network interface of the robotic garden tool, a type of obstacle of the obstacle from an external device, wherein the type of obstacle of the obstacle is received by the external device via a first user input.

8. The robotic garden tool of claim 1, wherein the obstacle is a first obstacle that is a first type of obstacle, and wherein the mapping information includes a third virtual boundary based on a third location of a second obstacle that is a second type of obstacle different from the first type of obstacle;
wherein the first electronic processor is configured to control the at least one wheel motor to move the robotic garden tool in the operating area to operate in a first manner nearby the second virtual boundary and operate in a second manner nearby the third virtual boundary, wherein the first manner is different than the second manner; and
wherein the first manner of operation is based on the first type of obstacle of the first obstacle, and wherein the second manner of operation is based on the second type of obstacle of the second obstacle;
and optionally
wherein the first manner of operation includes the first electronic processor controlling an edge cutting motor of an edge cutter to be enabled as the robotic garden tool moves around the second virtual boundary; and
wherein the second manner of operation includes the first electronic processor controlling the edge cutting motor to be disabled as the robotic garden tool moves around the third virtual boundary.

9. The robotic garden tool of claim 1, wherein the first electronic processor is configured to determine at least a portion of the first virtual boundary by:
receiving, from the at least one sensor, a second obstacle signal associated with a barrier that at least partially defines the operating area,
controlling the at least one wheel motor to move the robotic garden tool along the barrier in response to detecting the barrier based on the second obstacle signal;
recording a plurality of distance measurements and a plurality of angle measurements between the robotic garden tool and the barrier as the robotic garden tool moves along the barrier;
recording a plurality of first locations of the robotic garden tool as the robotic garden tool moves along the barrier;
determining the at least a portion of the first virtual boundary based on respective distance measurements of the plurality of distance measurements, respective angle measurements of the plurality of angle measurements, and respective first locations of the plurality of first locations;
generating the mapping information of the operating area, wherein the mapping information includes the at least a portion of the first virtual boundary; and
controlling the at least one wheel motor to move the robotic garden tool in the operating area to remain inside the first virtual boundary based on the mapping information.

10. A method of mapping an object encountered by a robotic garden tool, the method comprising:
controlling, with a first electronic processor of the robotic garden tool, at least one wheel motor of the robotic garden tool to move the robotic garden tool within a first virtual boundary that defines an operating area of the robotic garden tool, wherein the robotic garden tool includes
a housing,
a set of wheels coupled to the housing and configured to rotate to propel the robotic garden tool on an operating surface in the operating area,
the at least one wheel motor coupled to one or more wheels of the set of wheels, the at least one wheel motor configured to drive rotation of the one or more wheels, and
at least one sensor configured to generate signals associated with one or more objects within the operating area;
receiving, with the first electronic processor and from the at least one sensor, an obstacle signal associated with an obstacle located within the operating area;
determining, with the first electronic processor, a first location of the robotic garden tool at a time corresponding to when the first electronic processor received the obstacle signal;
determining, with the first electronic processor, a second location of the obstacle based on the obstacle signal and the first location of the garden tool;
generating, with the first electronic processor, mapping information of the operating area that includes a second virtual boundary based on the second location of the obstacle; and
controlling, with the first electronic processor, the at least one wheel motor to move the robotic garden tool in the operating area to remain outside of the second virtual boundary based on the mapping information.

11. The method of claim 10, further comprising:
controlling, with the first electronic processor, the at least one wheel motor to move the robotic garden tool toward the second location of the obstacle based on receiving an approximate location of the obstacle from an external device, the approximate location of the obstacle being received by the external device via a first user input.

12. The method of claim 10, wherein generating the mapping information that includes the second virtual boundary, further comprises:
controlling, with the first electronic processor, the at least one wheel motor to move the robotic garden tool around a perimeter of the obstacle in response to detecting the obstacle based on the obstacle signal;
recording, with the first electronic processor, a plurality of distance measurements and a plurality of angle measurements between the robotic garden tool and the obstacle as the robotic garden tool moves around the perimeter of the obstacle;
recording, with the first electronic processor, a plurality of first locations of the robotic garden tool as the robotic garden tool moves around the perimeter of the obstacle; and
determining, with the first electronic processor, the second virtual boundary based on respective distance measurements of the plurality of distance measurements, respective angle measurements of the plurality of angle measurements, and respective first locations of the plurality of first locations.

13. The method of claim 10, further comprising:
transmitting, with the first electronic processor via a network interface, the mapping information to an external device for displaying of a map of the operating area by the external device, wherein the map includes the second location of the obstacle, the second virtual boundary of the obstacle, or both the second location and the second virtual boundary;
and optionally further comprising:
identifying, with the first electronic processor, a type of obstacle of the obstacle based on the obstacle signal.

14. The method of claim 10, wherein the obstacle is a first obstacle that is a first type of obstacle, and wherein the mapping information includes a third virtual boundary based on a third location of a second obstacle that is a second type of obstacle different from the first type of obstacle, and further comprising:
controlling, with the first electronic processor, the at least one wheel motor to move the robotic garden tool in the operating area to operate in a first manner nearby the second virtual boundary and operate in a second manner nearby the third virtual boundary, wherein the first manner is different than the second manner;
wherein the first manner of operation is based on the first type of obstacle of the first obstacle, and wherein the second manner of operation is based on the second type of obstacle of the second obstacle;
and optionally
wherein controlling the at least one wheel motor to move the robotic garden tool in the operating area to operate in the first manner nearby the second virtual boundary and operate in the second manner nearby the third virtual boundary, further comprises:
controlling, with the first electronic processor, an edge cutting motor of an edge cutter to be enabled as the robotic garden tool moves around the second virtual boundary; and
controlling, with the first electronic processor, the edge cutting motor to be disabled as the robotic garden tool moves around the third virtual boundary.

15. The method of claim 10, further comprising determining at least a portion of the first virtual boundary by:
receiving, from the at least one sensor with the first electronic processor, a second obstacle signal associated with a barrier that at least partially defines the operating area;
controlling, with the first electronic processor, the at least one wheel motor to move the robotic garden tool along the barrier in response to detecting the barrier based on the second obstacle signal;
recording, with the first electronic processor, a plurality of distance measurements and a plurality of angle measurements between the robotic garden tool and the barrier as the robotic garden tool moves along the barrier;
recording, with the first electronic processor, a plurality of first locations of the robotic garden tool as the robotic garden tool moves along the barrier;
determining, with the first electronic processor, the at least a portion of the first virtual boundary based on respective distance measurements of the plurality of distance measurements, respective angle measurements of the plurality of angle measurements, and respective first locations of the plurality of first locations;
generating, with the first electronic processor, the mapping information of the operating area, wherein the mapping information includes the at least a portion of the first virtual boundary; and
controlling, with the first electronic processor, the at least one wheel motor to move the robotic garden tool in the operating area to remain inside the first virtual boundary based on the mapping information.
